(19) Europäisches Patentamt
European Patent Office
Office européen des brevets

(11) **EP 4 530 912 A1**

(12) **EUROPEAN PATENT APPLICATION**

(43) Date of publication:
**02.04.2025   Bulletin 2025/14**

(21) Application number: **23200529.8**

(22) Date of filing: **28.09.2023**

(51) International Patent Classification (IPC):
**G06F 30/27** (2020.01)     *G06F 111/10* (2020.01)
*G06F 119/08* (2020.01)     *G06N 3/02* (2006.01)

(52) Cooperative Patent Classification (CPC):
**G06F 30/27;** G06F 2111/10; G06F 2119/08;
G06N 3/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **MUKUNDAN, Meghesh
  560067 Bangalore, Karnataka (IN)**
• **SINGH, Arjun
  560066 Bangalore, Karnataka (IN)**

(74) Representative: **Horn Kleimann Waitzhofer
Schmid-Dreyer
Patent- und Rechtsanwälte PartG mbB
Theresienhöhe 12
80339 München (DE)**

(54) **SYSTEM AND METHOD FOR TEMPERATURE FIELD PREDICTION OF ELECTRICAL ENCLOSURES**

(57)    A method (500) of generating temperature field prediction of an electrical enclosure (200) comprising a plurality of electrical devices (202) is disclosed. The method comprises receiving (502) a user input including at least one parameter for each of the plurality of electrical devices. The method comprises determining (504) a temperature value corresponding to each of the plurality of electrical devices and a set of Red Green Blue (RGB) channel values corresponding to a thermal map associated with the electrical enclosure, based on user input and trained mathematical models. Further, the method comprises generating (506) the temperature field prediction based on the temperature value and set of RGB channel values. Furthermore, the method comprises displaying (508) on a user interface, the generated temperature field prediction including the determined temperature value and at least one of the determined set of RGB channel values or a generated thermal map.

500

FIG. 5

EP 4 530 912 A1

**Description**

The present invention generally relates to thermal management systems, and more particularly relates to a system and a method for temperature field prediction of electrical enclosures that include multiple electrical devices.

In industrial applications, electrical components and devices are generally placed inside electrical cabinets. The electrical cabinets are widely used in various industrial applications. Electrical devices within the electrical cabinets, when in operation, generate heat as a result of operating under various load conditions. The generated heat may vary from component to component within the electrical cabinet. The generated heat may also vary based on the different load conditions of the electrical components within the electrical cabinet.

With the generation of heat within the electrical cabinets, there is a risk of overheating of components, and consequently, failure of components within the electrical cabinets. Thermal management for electrical cabinets thus plays an important role for manufacturers of the electrical cabinets.

Conventional thermal management solutions include test bed setups that facilitate monitoring of component operation under varying load conditions. However, not only is running tests for a large set of load conditions operationally and/or computationally non-feasible, the tests also require expertise and extensive setup. Further, thermocouples may be positioned at different locations within the electrical cabinets to monitor temperature data within the electrical cabinets. However, thermocouples are costly and sensitive devices and can only be used in limited numbers and locations within the electrical cabinets.

In some cases, testing can be supplemented with modeling techniques such as techniques based on digital twin Computational Fluid Dynamics (CFD) models. Techniques related to CFD models and the related analysis also require expertise, and require large turnaround times. To cover a large number of load conditions, a high amount of analysis and CFD model computations are required, which may not be operationally and/or computationally feasible.

Accordingly, there is a need for a system and method to overcome the above-identified issues.

According to one embodiment of the present invention, a computer-implemented method of generating temperature field prediction of an electrical enclosure is disclosed. The electrical cabinet comprises a plurality of electrical devices. The method comprises receiving, by one or more processors, a user input including at least one parameter for each of the plurality of electrical devices. Further, the method comprises determining, by the one or more processors, using a set of trained mathematical models, a temperature value corresponding to each of the plurality of electrical devices and a set of Red Green Blue (RGB) channel values corresponding to a thermal map associated with the electrical enclosure, based on the at least one parameter included in the received user input. Furthermore, the method comprises generating, by the one or more processors, the temperature field prediction based on the determined temperature value corresponding to each of the plurality of electrical devices and the determined set of RGB channel values. Moreover, the method comprises displaying, by the one or more processors, on a user interface of a user device, the generated temperature field prediction including the determined temperature value associated with each of the corresponding plurality of electrical devices, and at least one of the determined set of RGB channel values or a generated thermal map. The disclosed method allows fast and directionally accurate prediction of temperature field within electrical enclosures that have the plurality of electrical devices. The temperature field prediction can be provided for a large number of load conditions, i.e., for a large number and combination of operating parameters. With the disclosed method, instantaneous predictions of electrical device temperatures and thermal maps associated with the electrical enclosures can be obtained, for various operating conditions. The temperature field prediction for multiple operating conditions facilitates better and optimal thermal management. As the thermal management can be optimized, cabinet manufacturers are enabled to quickly and accurately view predicted temperature fields within the electrical enclosures, such as via a user device. That is, directionally accurate predictions can be provided quickly. This is particularly beneficial at the time of placement of electrical devices within the electrical enclosure since the manufacturers may determine the optimal positioning of the electrical components under various operating conditions. As the manufacturers would be aware of predicted temperature fields under various operating conditions, the thermal management is optimized and the risk for overheating and/or failure of electrical devices is reduced.

Further, in generating the temperature field prediction, the method includes determining a set of pixel values based on combining corresponding RGB channel values from among the set of RGB channel values. The method further includes generating the thermal map based on the determined set of pixel values. As the method includes predicting RGB channel values and generating a thermal map based on the RGB channel values, the computation of temperature field prediction is efficient as well as accurate.

Further, a first mathematical model of the set of trained mathematical models is trained to determine the temperature value corresponding to each of the plurality of electrical devices, The first mathematical model is trained based on a first dataset including a plurality of reference parameters and corresponding reference temperature values associated with the plurality of electrical devices. With the reference temperature values and reference parameters, the first dataset may be formed for parameters of interest corresponding to the plurality of electrical devices. Accordingly, the first mathematical model trained on the first dataset can provide accurate predictions when deployed.

Further, a second mathematical model of the set of trained mathematical models is trained to determine at least one of the set of RGB channel values or the thermal map. The second mathematical model is trained based on a second dataset including a plurality of reference parameters associated with the plurality of electrical devices and corresponding reference thermal maps. The second mathematical model may be trained for the prediction of a temperature field at a specific plane that passes through all electrical devices within the electrical enclosure. Reference thermal maps may be provided as outputs while the reference parameters may be provided as inputs to train the second mathematical model. The second mathematical model may be trained on a lesser number of inputs as compared to the outputs. For example, the second mathematical model may be trained on 6 parameters as inputs and thousands of pixel values corresponding to the reference thermal images as outputs. Even with a limited dataset, and without requiring training on a large amount of data, the second mathematical model may be trained on the second dataset to facilitate prediction of accurate temperature fields.

Furthermore, in training the second mathematical model, the method includes determining a pixel matrix corresponding to each of the corresponding reference thermal maps included in the received second dataset. Further, the method includes generating reference RBG channel values based on the determined pixel matrices associated with each of the corresponding reference thermal maps. Further, the method includes training, based on the plurality of reference parameters and the generated reference RGB channel values, the second mathematical model of the set of trained mathematical models to determine at least one of the set of RGB channel values or the thermal map. As the second mathematical model is trained on reference RGB channel values, the second mathematical model, when deployed in use, predicts the corresponding RGB channel values given the parameters of the electrical devices as inputs. The RGB values are then re-combined to form the thermal maps which indicate temperature contour within the electrical enclosure. With the training of the second mathematical model on RGB channel values, the second mathematical model is computationally efficient while training as well as has a compact architecture. Further, with the reference thermal maps encoded in the form of a matrix, the second mathematical model remains agnostic to the source of the second dataset.

Furthermore, each of the first mathematical model and the second mathematical model is an Artificial Neural Network (ANN). With the use of ANNs, the mathematical models may be trained on a limited dataset, as compared to known Convolution Neural Networks (CNNs) which require a large dataset for accurate predicts. As a result, the mathematical models may be trained based on a dataset that comprises relevant reference parameters. Moreover, the ANNs can be trained to handle 'stiff' problems without requiring training on large amounts of data.

Furthermore, the thermal map corresponds to a graphical representation of the temperature values associated with the plurality of electrical devices in at least one of a 2-Dimensional (2D) space or a 3-Dimensional (3D) space. The thermal map may thus represent the temperature contour within the electrical enclosure. The temperature contour may be specific to a longitudinal plane of the electrical enclosure such that each of the plurality of electrical devices are included in the plane and the temperature contour is available for each of the plurality of electrical devices.

According to another embodiment of the present invention, a system for generating temperature field prediction of an electrical enclosure comprising a plurality of electrical devices is disclosed. The system includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

According to another embodiment of the present invention, an environment is disclosed. The environment includes a system, as discussed throughout the present invention, and a user device communicatively coupled to the system via a network. The system is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a cloud server for generating temperature field prediction of an electrical enclosure comprising a plurality of electrical devices is disclosed. The clouds server includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:

FIG. 1 illustrates a block diagram of an environment comprising a system for generating temperature field predictions of an electrical enclosure, according to an embodiment of the present invention;

FIG. 2A illustrates a pictorial depiction of an electrical enclosure with a plurality of electrical devices, according to an embodiment of the present invention;

FIG. 2B illustrates a pictorial depiction of a virtual model of the electrical enclosure, according to an embodiment of the present invention;

FIG. 2C illustrates a pictorial depiction of a thermal map associated with the electrical enclosure, according to an embodiment of the present invention;

FIG. 3 illustrates a pictorial depiction representing a first dataset for training a first mathematical model, according to an embodiment of the present invention;

FIG. 4 illustrates a pictorial depiction representing a second dataset for training a second mathematical model, according to an embodiment of the present invention;

FIG. 5 illustrates an exemplary process flow depicting a method for generating temperature field predictions of an electrical enclosure, according to an embodiment of the present invention;

FIG. 6 illustrates representation of trained mathematical models, according to an embodiment of the present invention;

FIG. 7 illustrates another representation of trained mathematical models, according to an embodiment of the present invention; and

FIG. 8 illustrates an exemplary representation of a graphical user interface (GUI), according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

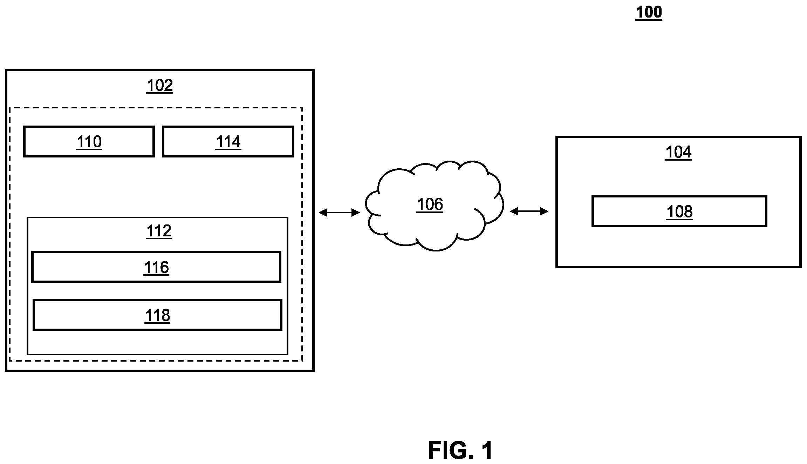

FIG. 1 illustrates a block diagram of an environment 100 comprising a system 102 for generating temperature field predictions of an electrical enclosure, according to an embodiment of the present invention. The electrical enclosure comprises a plurality of electrical devices. The system 102 is communicatively coupled to a user device 104 via a network 106.

The user device 104 comprises a user interface 108. In an embodiment, the user interface 108 enables a user to provide one or more user inputs indicative of parameters for each of the plurality of electrical devices within the electrical enclosure. In an embodiment, the user interface 108 enables a user associated with the user device 104 to transmit and receive data to the system 102. In an embodiment, the user interface 108 is associated with a display unit that enables a user to view data associated with the system 102. In an embodiment, the user interface 108 is a graphical user interface (GUI). In an embodiment, the user provides user inputs indicative of at least one parameter for each of the plurality of electrical devices via the user interface 108.

In an exemplary embodiment, the user device 104 and/or the electronic devices include a laptop computer, a desktop computer, a smartphone, and the like. Further, the network 106 includes a wireless network or a wired network. For example, the network 106 corresponds to cellular networks or mobile networks, such as 3G, 4G, 5G, pre-5G, 6G network, or any other wireless communication network.

The system 102 for generating temperature field prediction of the electrical enclosure includes one or more processors 110 and a memory 112. As a non-limiting example, the one or more processors 110 are a single processing unit or a set of units each including multiple computing units. The one or more processors 110 are implemented as one or more microprocessors, microcomputers, microcontrollers, digital signal processors, central processing units, state machines, logic circuitries, and/or any devices that manipulate signals based on operational instructions (computer-readable instructions) stored in the memory 112. Among other capabilities, the one or more processors 110 are configured to fetch and execute computer-readable instructions and data stored in the memory 112. The one or more processors 110 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an AI-dedicated processor such as a neural processing unit (NPU). The plurality of processors control the processing of the input data in accordance with a predefined operating rule or an artificial intelligence (AI) model stored in the memory 112. The predefined operating rule or the AI model is provided through training or learning.

The one or more processors 110 are disposed in communication with one or more input/output (I/O) devices via an Input/Output (I/O) interface 114. The I/O interface 114 employs communication code-division multiple access (CDMA), high-speed packet access (HSPA+), global system for mobile communications (GSM), long-term evolution (LTE), WiMax, or the like, etc. In another embodiment of the present invention, the I/O interface 114 employs ethernet, industrial wireless Local Area Network (LAN), Process Field Bus (PROFIBUS), Actuator Sensor (AS) Interface, and the like.

In some embodiments, the memory 112 is communicatively coupled to the one or more processors 110. The memory 112 is configured to store instructions executable by the one or more processors 110. In one embodiment, the memory 112 communicates via a bus within the system 102. The memory 112 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 110. In alternative examples, the memory 112 is separate from the one or more processors 110 such as a cache memory of a processor, the system memory, or other memory. The memory 112 is an external storage device or a database for storing data. The memory 112 is operable to store instructions executable by the one or more processors 110. The functions, acts or tasks illustrated in the figures or described are performed by the programmed processor for executing the instructions stored in the memory 112. The functions, acts or tasks are independent of the particular type of instructions set, storage media, processor or processing strategy and may be performed by software, hardware, integrated circuits, firmware, micro-code and the like, operating alone or in combination. Likewise, processing strategies include multiprocessing, multitasking, parallel processing, and the like.

The memory 112 further includes a database 116 to store data. Further, the memory 112 includes an operating system 118 for performing one or more tasks of the system 102, as performed by a generic operating system in the communications domain. In one embodiment, the database 116 is configured to store the information as required by the one or more processors 110 to perform one or more functions for generating temperature field prediction of the electrical enclosure.

In an embodiment, the system 102 is a cloud-based system, such as a cloud server. In such an embodiment, the functionality of the system 102 may be provided by the cloud server, and the details provided with respect to the system 102 would be applicable for the cloud server. In another embodiment, the system 102 is hosted on one or more electronic devices. Specifically, the system 102 may be hosted on the user device 104. In an embodiment, the system 102 is provided in a distributed manner, in that, one or more components and/or functionalities of the system 102 are provided through an electronic device, and one or more components and/or functionalities of the system 102 are be provided through a cloud-based unit, such as, a cloud storage or a cloud-based server. In a non-limiting example, the database 116 may be provided through the cloud storage and the one or more processors 110 may be integrated with an electronic device (such as the user device 104).

Further, the present invention also contemplates a computer-program product that includes instructions or receives and executes instructions responsive to a propagated signal. Further, the instructions may be transmitted or received over the network 106 via a communication port or interface or using a bus (not shown). The communication port or interface may be a part of the one or more processors 110 or may be a separate component. The communication port may be created in software or may be a physical connection in hardware. The communication port may be configured to connect with the network 106, external media, the display, or any other components in the system 102. The connection with the network 106 may be a physical connection, such as a wired ethernet connection, or may be established wirelessly. Likewise, the additional connections with other components of the system 102 may be physical or may be established wirelessly. The network 106 may alternatively be directly connected to the bus. For the sake of brevity, the architecture, and standard operations of the memory 112 and the one or more processors 110 are not discussed in detail.

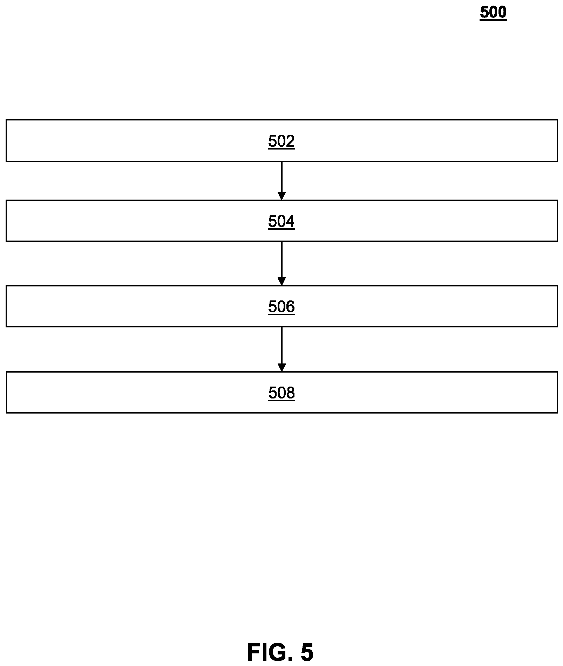

In an embodiment, the computer-program product, having machine-readable instructions stored therein, when executed by one or more processors 110, cause the one or more processors 110 to perform a method of generating temperature field prediction of the electrical enclosure. The details on the method(s) performed by the one or more processors 110 have been elaborated in subsequent paragraphs at least with reference to FIG. 5.

Further, the present invention also contemplates a non-transitory computer-readable medium encoded with executable instructions. The executable instructions, when executed by one or more processors 110, cause the one or more processors 110 to perform a method of generating temperature field prediction of the electrical enclosure. The details on the method(s) performed by the one or more processors 110 have been elaborated in subsequent paragraphs at least with reference to FIG. 5. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

In an embodiment of the present invention, the one or more processors 110 are configured to receive at least one parameter for each of the plurality of electrical devices. As described above, the electrical enclosure comprises a plurality of electrical devices. In an embodiment, the at least one parameter is indicative of a load condition of the corresponding device of the plurality of devices. In an embodiment, the at least one parameter is indicative of a power rating of the corresponding device of the plurality of devices.

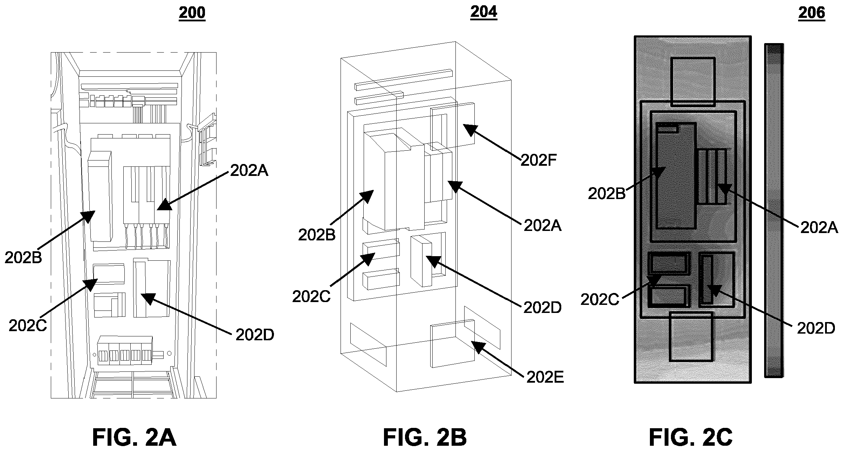

Referring to FIG. 2A, an exemplary pictorial depiction of the electrical enclosure with the plurality of electrical devices is illustrated, in accordance with an embodiment of the present invention. As seen in FIG. 2A, the electrical enclosure 200 comprises a plurality of electrical devices 202A, 202B, 202C, 202D, 202E, 202F, and so on (collectively referred to as '202'). The plurality of electrical devices are heat-producing components to be positioned within the electrical enclosure 200. In an embodiment, the plurality of electrical devices 202 include switch gears, motor drives, circuit breakers, and the like.

FIG. 2B depicts an exemplary pictorial depiction of a virtual model 204 of the electrical enclosure 200. The virtual model may be representative of the electrical enclosure 200 and the plurality of electrical devices 202. In an embodiment, the virtual model may be generated through a modelling software, such as computer-aided design (CAD).

FIG. 2C depicts an exemplary pictorial depiction of a thermal map 206 associated with the electrical enclosure 200, as will be described further below. In an embodiment, the thermal map 206 is a graphical representation of the temperature values associated with the plurality of electrical devices in at least one of a 2-Dimensional (2D) space or a 3-Dimensional (3D) space. In an embodiment, the thermal map 206 is indicative of temperature within the electrical enclosure 200 in a longitudinal plane of the electrical enclosure 200, where the longitudinal plane passes through each of the plurality of electrical devices 202 within the electrical enclosure 200.

The one or more processors 110 are configured to determine a temperature value corresponding to each of the plurality of electrical devices. The one or more processors 110 are further configured to determine a set of Red Green Blue (RGB) channel values corresponding to the thermal map 206 associated with the electrical enclosure 200. The one or more processors 110 are configured to determine the temperature values and the set of RGB values using a set of trained mathematical models. In an embodiment, the set of trained mathematical models is stored in the memory 112, such as, in the database 116 within the memory 112.

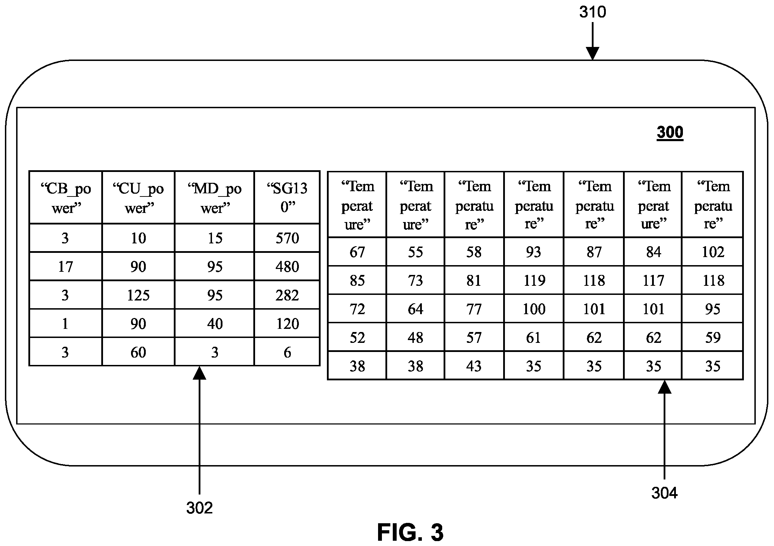

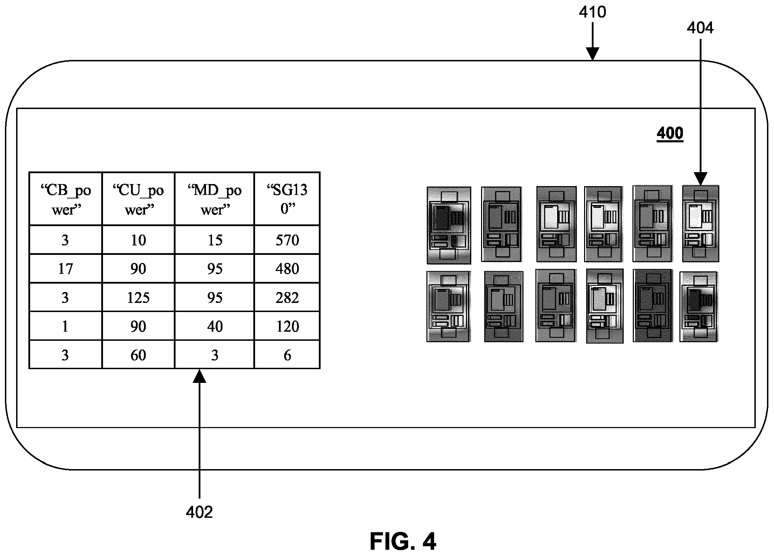

In an embodiment, the set of trained mathematical models includes a first mathematical model and a second mathematical model. In an embodiment, each of the first mathematical model and the second mathematical model is an Artificial Neural Network (ANN). In an embodiment, the first mathematical model is trained based on a first dataset, and the second mathematical model is trained based on a second dataset. FIG. 3 depicts a graphical user interface (GUI) 310 in which an exemplary first dataset 300 is being displayed, in accordance with an embodiment of the present invention. FIG. 4 depicts a GUI 410 in which an exemplary second dataset 400 is being displayed, in accordance with an embodiment of the present invention. In an embodiment, the GUI 310, 410 may be associated with the user device 104, thereby allowing a user associated with the user device 104 to access and/or update the dataset 310, 410, when required.

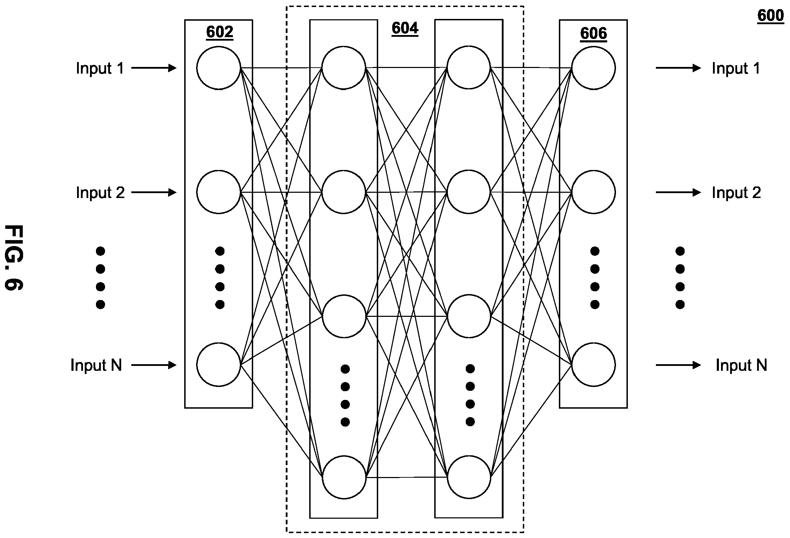

Referring to FIG. 6, an exemplary representation of the set of trained mathematical models is illustrated. The set of trained mathematical models, for instance the first mathematical model and the second mathematical model, are Artificial Neural Networks (ANNs).

ANNs refer to machine learning (ML) and artificial intelligence (AI) models which process data and learn from data. ANNs may be considered as mathematical models that are inspired by the structure and functioning of the human brain's neural networks. ANNs comprise a network of interconnected nodes, referred to as neurons.

ANNs generally consist of artificial neurons featuring an architecture that is determined at design time. The neurons can be hardware circuits or defined programmatically. The function of ANNs are defined by connections between the neurons in a layer, connections between layers of neurons, synaptic weights, and the pre-processing of input data to fit a predefined input range.

As shown in FIG. 6, an ANN 600 includes an input layer 602, one or more hidden layers 604, and an output layer 606. The ANN 600 corresponds to the first mathematical model and/or the second mathematical model. Inputs (input 1, input 2, ...input N) are provided to the ANN 600 and outputs (output 1, output 2, ...output N) are predicted by the ANN 600.

The input layer 602 may be configured to receive input data. Each neuron within the input layer may represent a distinct feature or attribute of the data. The input data may include data such as images, text, numerical values, and the like.

The one or more hidden layers 604 may be positioned between the input layer 602 and the output layer 604. The one or more hidden layers perform calculations on input data through weighted connections and applying activation functions to produce outputs. Weights refer to parameters which determine the strength of connections between the neurons. Each connection from one neuron to another neuron is associated with a weight which may be a numerical value representing the importance of that connection in the overall network. During the training of the ANN, the weights associated with the connections between different neurons may be adjusted to optimize performance of the ANN.

Prior to training, the weights may be initialized randomly. For instance, random values may be inferred from a Gaussian distribution or a uniform distribution. During training, the weights may be updated based on prediction errors of the ANN. The weights may be updated to reduce the prediction error. For instance, a gradient of the prediction error may be calculated with respect to the weights. The weights may then be updated so as to reduce the prediction error. One example of weight updates may be via gradient descent.

The output layer 606 may be configured to generate the prediction from the input as output. The output may be in the form of classification, regression prediction, or any other output. In the ANN 600, inference can be performed using a multiply-accumulate (MAC) operation. In a MAC operation, incoming data values can be multiplied by a plurality of synaptic weights stored in a memory. For example, an ANN can perform multiple MAC operations per image to classify an object in the image. The results of these multiplications can then be integrated by addition in each neuron in the network. After performing the MAC operation, a non-linear function can be applied to the integrated value of a neuron resulting in an output value. The output value can be a floating-point value.

As described above, multiple layers can be used to create an ANN to perform a specific task. Many neurons can be used in parallel in each layer of the ANN. A pooling operation can also be performed between layers. Data may progress through the ANN 600 in a systematic manner, flowing from the input layer 602 to the hidden layers 604 and then to the output layer 606. The weighted sum of inputs undergoes transformation through an activation function at each neuron to add non-linearity, which enables the ANN 600 to model data patterns and relationships.

Activation functions determine output of a neuron based on the weighted sum of inputs. The activation function may include Sigmoid function, Hyperbolic Tangent (tanh), Rectified Linear Unit (ReLU), Leaky ReLU, and the like.

The training process of the ANN 600 may be carried out using supervised learning or using unsupervised learning. In supervised learning, the ANN 600 is presented with labelled data. During training, the ANN 600 may compute the predictions and compare with actual outputs. Based on the comparison, the weights between the neuron connections may be adjusted and optimized. The training process may continue till the prediction of the ANN 600 closely matches the actual outputs.

Some examples of training methods include Backpropagation, batch training, Stochastic Gradient Descent (SGD), Regularization, and the like.

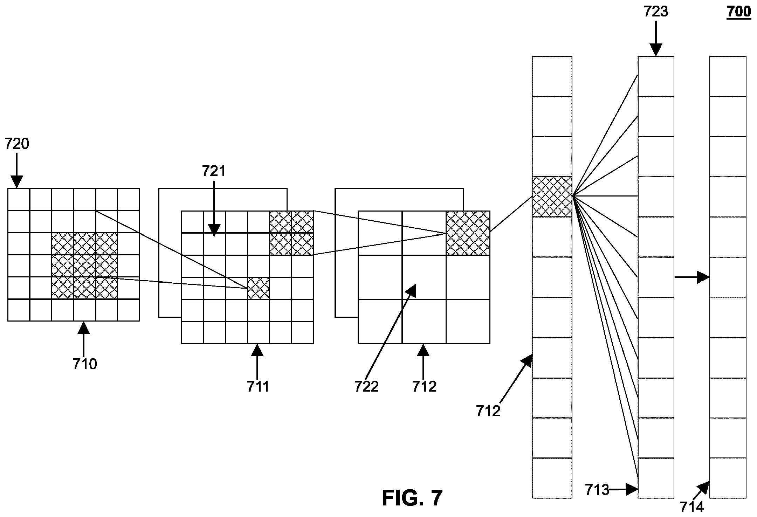

Referring to FIG. 7, an exemplary representation of the set of trained mathematical models is illustrated. The set of trained mathematical models, for instance the first mathematical model and the second mathematical model, may be Convolutional Neural Networks (CNNs). Examples of CNNs may include, but are not limited to, Fast Region based CNN (Fast R-CNN), Faster Region based CNN (or Faster R-CNN), Mask Region based CNN (or Mask R-CNN) and You Only Look Once (YOLO).

As seen in FIG. 7, the CNN 700 comprises an input layer 710, a convolutional layer 711, a pooling layer 712, a fully connected layer 713, and an output layer 714. It is appreciated that multiple layers may be included with each of the layers of the CNN 700. In some embodiments, the order of the layers may be chosen arbitrarily. In the CNN 700, the nodes 720, ..., 724 of layers 710, ..., 714 may be considered to be arranged as a d-dimensional matrix or as a d-dimensional image. In particular, in the two-dimensional case, the value of the node 720, ..., 724 indexed with i and j in the n-th layer 710, ..., 714 may be denoted as $x^{(n)}[i,j]$. However, the arrangement of the nodes 720, ..., 724 of one layer 710, ..., 714 does not have an effect on the calculations executed within the CNN 700 since these are given solely by the structure and the weights of the edges.

The convolutional layer 711 is characterized by the structure and the weights of the incoming edges forming a convolution operation based on a certain number of kernels. In particular, the structure and the weights of the incoming edges are chosen such that the values $x^{(n)}k$ of the nodes 721 of the convolutional layer 711 are calculated as a convolution $x^{(n)}k = K_k * x^{(n-1)}$ based on the values $x^{(n-1)}$ of the nodes 720 of the preceding layer 710, where the convolution* is defined in the two-dimensional case as:

$$x_k^{(n)}[i,j] = (K_k * x^{(n-1)}[i,j] = \sum\nolimits_{i'} \sum\nolimits_{j'} K_k[i',j'] . x^{(n-1)}[i-i',[j-j']$$

Here the k-th kernel $K_k$ is a d-dimensional matrix (in the present embodiment, a two-dimensional matrix), which is usually small compared to the number of nodes 720, ..., 724 (e.g., a $3 \times 3$ matrix, or a $5 \times 5$ matrix). In particular, this implies that the weights of the incoming edges are not independent but chosen such that they produce said convolution equation. In particular, for a kernel being a $3 \times 3$ matrix, there are only 9 independent weights (each entry of the kernel matrix corresponding to one independent weight), irrespectively of the number of nodes 720, ..., 724 in the respective layer 710, ..., 714. In particular, for a convolutional layer 711, the number of nodes 721 in the convolutional layer is equivalent to the number of nodes 720 in the preceding layer 710 multi- plied with the number of kernels.

If the nodes 720 of the preceding layer 710 are arranged as a d-dimensional matrix using a plurality of kernels may be interpreted as adding a further dimension (denoted as "depth" dimension), so that the nodes 721 of the convolutional layer 721 are arranged as a (d+1)-dimensional matrix. If the nodes 720 of the preceding layer 710 are already arranged as a (d+1)-dimensional matrix comprising a depth dimension using a plurality of kernels may be interpreted as expanding along the depth dimension so that the nodes 721 of the convolutional layer 721 are arranged also as a (d+1)-dimensional matrix. The size of the (d+1)-dimensional matrix with respect to the depth dimension is by a factor of the number of kernels larger than in the preceding layer 710.

In the displayed embodiment, the input layer 710 comprises 36 nodes 720 arranged as a two-dimensional $6 \times 6$ matrix. The convolutional layer 711 comprises 72 nodes 721, arranged as two two-dimensional $6 \times 6$ matrices, each of the two matrices being the result of a convolution of the values of the input layer with a kernel. Equivalently, the nodes 721 of the convolutional layer 711 may be interpreted as arranges as a three-dimensional $6 \times 6 \times 2$ matrix, wherein the last dimension is the depth dimension.

The pooling layer 712 may be characterized by the structure and the weights of the incoming edges and the activation function of its nodes 722 forming a pooling operation based on a non-linear pooling function f. For example, in the two-dimensional case the values $x^{(n)}$ of the nodes 722 of the pooling layer 712 may be calculated based on the values $x^{(n-1)}$ of the nodes 721 of the preceding layer 711 as $x^{(n)}[i, j] = f(x^{(n-1)}[id_1, jd_2], ..., x^{(n-1)}[id_1+d_1-1, jd_2+d_2-1])$. In other words, the number of nodes 721, 722 may be reduced by using the pooling layer 712, by replacing a number di • d2 of neighbouring nodes 721 in the preceding layer 711 with a single node 722 being calculated as a function of the values of said number of neighbouring nodes in the pooling layer. In particular, the pooling function f may be the max-function, the average or the L2-Norm. In particular, for the pooling layer 712, the weights of the incoming edges are fixed and are not modified by training.

The fully-connected layer 713 may be characterized by the fact that a majority, in particular, all edges between nodes 722 of the previous layer 712 and the nodes 723 of the fully-connected layer 713 are present. The weight of each of the edges may be adjusted individually. In the present embodiment, the nodes 722 of the preceding layer 712 of the fully-connected layer 713 are displayed both as two-dimensional matrices, and additionally as non-related nodes (indicated as a line of nodes, wherein the number of nodes was reduced for a better presentability).

In some embodiments, the number of nodes in the layers may vary. In some embodiments, the CNN 700 may include a ReLU layer. In some embodiments, the CNN 700 may be trained based on the back-propagation algorithm. In some embodiments, methods of regularization may be used.

Referring collectively to FIGS. 1-4, in an embodiment, the first mathematical model is trained to determine the temperature value corresponding to each of the plurality of electrical devices 202. The first mathematical model is trained based on the first dataset 300 including a plurality of reference parameters and corresponding reference temperature values associated with the plurality of electrical devices 202. The reference temperature values and the reference parameters refer to training values or sample values based on which the first mathematical model is trained to predict and determine temperature value corresponding to each of the plurality of electrical devices 202.

In an embodiment, the first dataset is generated and stored in the memory 112, such as, in the database 116 of the memory 112. As described above, the first dataset 300 includes the plurality of reference parameters 302 and corresponding reference temperature values 304 associated with the plurality of electrical devices 202. In an embodiment, the first dataset 300 is generated for multiple operating conditions of the plurality of electrical devices 202. The operating conditions refer to conditions of the plurality of electrical devices 202 being associated with corresponding parameters, i.e., load conditions and/or power ratings of the plurality of electrical devices 202. In an embodiment, for each set of reference parameters, a corresponding set of reference temperature values are correlated and stored as the first dataset 300.

In an embodiment, to train the first mathematical model, the one or more processors 110 are configured to provide, from the first dataset 300, the plurality of reference parameters 302 for each of the plurality of electrical devices 202 as inputs to the first mathematical model. Further, the one or more processors 110 are configured to provide, from the first dataset 300, the reference temperature values 304 as outputs to the first mathematical model. The first mathematical model is trained to determine the temperature values based on the provided inputs and the provided outputs from the first dataset 300.

In an embodiment, prior to providing the plurality of reference parameters 302 for each of the plurality of electrical devices 202 as inputs to the first mathematical model and the reference temperature values 304 as outputs to the first mathematical model, the first dataset 300 is pre-processed by the one or more processors 110. In an embodiment, the pre-processing of the first dataset 300 includes cleaning of data, transformation of data, filtering of data, and the like.
In an embodiment, the second mathematical model is trained to determine at least one of the set of RGB channel values or the thermal map associated with the electrical enclosure 200. The second mathematical model is trained based on the second dataset 400 including a plurality of reference parameters and corresponding reference thermal maps associated with the electrical enclosure 200. The reference temperature values and the reference thermal maps refer to training data based on which the second mathematical model is trained to predict and determine at least one of the set of RGB channel values or the thermal map associated with the electrical enclosure 200.

In an embodiment, the second dataset is generated and stored in the memory 112, such as, in the database 116 of the memory 112. As described above, the second dataset 400 includes the plurality of reference parameters 402 and corresponding reference thermal maps 404. In an embodiment, the second dataset 400 is generated for multiple operating conditions of the plurality of electrical devices 202, i.e., for different load conditions and/or power ratings of the plurality of electrical devices 202. In an embodiment, for each set of reference parameters 402, a corresponding thermal map 404 is correlated and stored as the second dataset 400.

In an embodiment, to train the second mathematical model, the one or more processors 110 are configured to provide, from the second dataset 400, the plurality of reference parameters 402 for each of the plurality of electrical devices 202 as inputs to the second mathematical model. Further, the one or more processors 110 are configured to provide, from the second dataset 400, the reference thermal maps 404 as outputs to the second mathematical model. The second mathematical model is trained to determine at least one of the set of RGB channel values or the thermal map based on the provided inputs and the provided outputs from the second dataset 400.

In an embodiment, to train the second mathematical model, the one or more processors 110 are configured to determine a pixel matrix corresponding to each of the corresponding reference thermal maps included in the second dataset 400. The one or more processors 110 are further configured to generate reference RGB channel values based on the determined pixel matrices associated with each of the corresponding reference thermal maps. The reference thermal maps may be separated into three values, in that, corresponding reference RGB channel values may be generated for each pixel of the thermal map.

In an embodiment, the pixel matrix corresponding to each of the corresponding reference thermal maps is in the form of an array. The corresponding reference RGB channel values may be provided as outputs to the second mathematical model. Based on the provided outputs being the generated reference RGB channel values, the second mathematical model may be trained to predict the set of RGB channel values. In an embodiment, a thermal scale is associated with the reference thermal maps, the thermal scale being indicative of temperature within various regions of the reference thermal maps. As a non-limiting example, a 'red' color on the thermal scale may be indicative of a high temperature while a 'blue' color on the thermal scale may be indicative of a low temperature.

In an embodiment, the trained first mathematical model and the trained second mathematical model are stored in the database 116 of the memory 112. The trained first mathematical model and the trained second mathematical model are deployed in use via the system 102, in that, the one or more processors 110 of the system 102 may use the first mathematical model and the second mathematical model to generate temperature field predictions for the electrical enclosure 200.

As described above, the one or more processors 110 are configured to receive at least one parameter for each of the plurality of electrical devices 202 as a user input. The one or more processors 110 are further configured to determine the temperature values and the set of RGB values based on the received user input, by using the first mathematical model and the second mathematical model. As the first mathematical model is trained to determine the temperature values for each of the plurality of devices 202, the user input indicative of at least one parameter for each of the plurality of electrical devices 202 is provided as an input to the first mathematical model. Based on the input, the trained first mathematical model predicts the temperature values for each of the plurality of devices 202.

Further, as the second mathematical model is trained to determine the set of RGB channel values corresponding to a thermal map, the user input indicative of at least one parameter for each of the plurality of electrical devices 202 is provided as an input to the second mathematical model. Based on the input, the trained second mathematical model predicts the set of RGB channel values corresponding to a thermal map for the electrical enclosure 200.

Based on the determined temperature value corresponding to each of the plurality of electrical devices and the determined set of RGB channel values, the one or more processors 110 are configured to generate temperature field predictions. The generated temperature field prediction includes the determined temperature value associated with each of the corresponding plurality of electrical devices. The generated temperature field prediction further includes at least one of the determined set of RGB channel values or a thermal map generated based on the determined set of RGB channel values.

In an embodiment, the one or more processors 110 are configured to generate a thermal map corresponding to the electrical enclosure 200, the electrical enclosure having the plurality of devices 202 with operating conditions defined by the at least one parameter received as the user input. The thermal map is generated based on combining the determined set of RGB channel values.

In an embodiment, the one or more processors 110 are configured to determine a set of pixel values based on combining corresponding RGB channel values from among the set of RGB channel values. That is, corresponding RGB channel values are combined so as to form a corresponding pixel value, and the set of pixel values is determined based on combining the corresponding RGB channel values from among the set of RGB channel values. The one or more processors 110 are further configured to generate the thermal map based on the determined set of pixel values. In an embodiment, the corresponding RGB channel values are predicted by the second mathematical model, and the thermal map is generated by recombining the corresponding RGB channel values.

The generated thermal map and the generated temperature values define the temperature field prediction for the electrical enclosure 200 given the at least one parameter for each of the plurality of electrical devices. The one or more processors 110 are further configured to display the generated temperature field prediction on the user interface 108 of the user device 104. In an embodiment, the one or more processors 110 are configured to store, in the database 116 within the memory 112, the generated temperature filed prediction in correlation with the received at least one parameter for each of the plurality of electrical devices 202.

In operation, the one or more processors 110 are configured to receive at least one parameter for each of the plurality of electrical devices 202. The one or more processors 110 are configured to provide the received at least one parameter as input to the first mathematical model. The first mathematical model processes the input and predicts temperature values as outputs. As an example, the electrical enclosure 200 may include three electrical devices - device 1, device 2 and device 3. A user inputs respective power ratings for each of the three electrical devices by means of a user interface of an associated user device (for example, user device 104). The respective power ratings for each of the three electrical devices are provided as input to the first mathematical model, as shown in Table 1. Based on the input power ratings, the first mathematical model predicts temperature values associated each of the electrical devices within the electrical enclosure 200, as shown in Table 1.

Table 1

| INPUT | | | OUTPUT | | |
|---|---|---|---|---|---|
| Device 1 | Device 2 | Device 3 | Device 1 | Device 2 | Device 3 |
| 10 | 15 | 7 | 63 | 89 | 52 |

Further, the one or more processors 110 are configured to provide the received at least one parameter as input to the second mathematical model. The second mathematical model processes the input at least one parameter and predicts a set of RGB channel values corresponding to a thermal map associated with the electrical enclosure 200. As an example, the electrical enclosure 200 may include three electrical devices - device 1, device 2 and device 3. The respective power ratings for each of the three electrical devices are provided as input to the second mathematical model, in an analogous manner as described above with reference to Table 1. Based on the input power ratings, the second mathematical model may predict a set of RGB values. Further, a thermal map may be generated based on the predicted RGB values. In one example, the generated thermal map may be similar to the thermal map depicted with reference to FIG. 2C.

The predicted temperature values associated each of the electrical devices within the electrical enclosure 200 as well as the generated thermal map may be displayed to the user. For instance, the predicted temperature values and the thermal map may be displayed on the user interface of the associated user device. The user may modify the input parameters, i.e., the power ratings and the temperature values and thermal maps for the modified input parameters would be generated and displayed on the user interface.

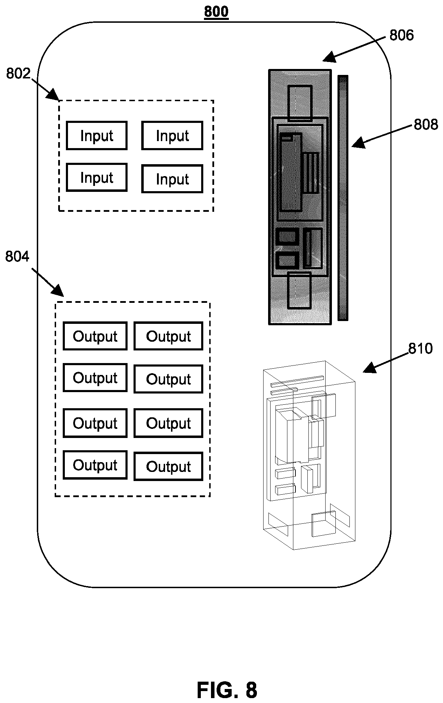

An exemplary graphical user interface (GUI) 800 is depicted in FIG. 8. The user interface 800 may correspond to the user interface 108 in FIG. 1. The user interface 800 allows the user to provide input parameters and get predictions related to temperature values and thermal maps. The user interface 800 comprises a plurality of input fields 802 which enables the user to provide input regarding the temperature ratings of the plurality of electrical devices 202. The user interface 800 further includes a plurality of temperature output fields 804 which is populated based on the predicted temperature values. The user interface 800 further includes one or more image output fields 806 where the generated thermal map may be displayed. The one or more image output fields 806 may include thermal maps based on prediction of the second mathematical model as well as thermal maps corresponding to the second dataset. The user may thus be enabled to input power rating of the plurality of electrical devices 202 and obtain the predicted temperature values and the thermal map.

The user interface 800 further includes a temperature scale 808 which enables the user to study the thermal map being displayed. The user interface 800 may further include a virtual model 810 of the electrical enclosure 200 and the plurality of electrical devices 202. The virtual model 810 may correspond to the virtual model explained with respect to FIG. 2B. In an embodiment, the user interface 800 may include one or more additional fields, such as, fields associated with geometry of the enclosure 200, CFD simulation results, and graphical representation indicating closeness of inputs to the available dataset.

FIG. 5 illustrates an exemplary process flow depicting a computer-implemented method 500 for generating temperature field prediction of an electrical enclosure, according to an embodiment of the present invention. The method 500 is performed by the system 102, as shown in FIG. 1. In an embodiment, the method 500 is performed by one or more processors 110 of the system 102.

At step 502, a user input including at least one parameter for each of the plurality of electrical devices within the electrical enclosure is received by the one or more processors 110. In an embodiment, the user input is received from a user interface associated with a user device.

At step 504, a temperature value corresponding to each of the plurality of electrical devices and a set of RGB channel values corresponding to a thermal map associated with the electrical enclosure are determined by the processor. The temperature value and the set of RGB channel values is determined using a set of trained mathematical models based on the at least one parameter included in the received user input.

In an embodiment, a first mathematical model of the set of trained mathematical models is trained to determine the temperature value corresponding to each of the plurality of electrical devices. In an embodiment, the first mathematical model is trained based on a first dataset including a plurality of reference parameters and corresponding reference temperature values associated with the plurality of electrical devices. In an embodiment, each of the first mathematical models and the second mathematical model is an Artificial Neural Network (ANN).

In an embodiment, a second mathematical model of the set of trained mathematical models is trained to determine at least one of the set of RGB channel values or the thermal map. In an embodiment, the second mathematical model is trained based on a second dataset including a plurality of reference parameters associated with the plurality of electrical devices and corresponding reference thermal maps. In an embodiment, a pixel matrix corresponding to each of the corresponding reference thermal maps included in the received second dataset is determined, and reference RBG channel values based on the determined pixel matrices associated with each of the corresponding reference thermal maps are generated. In an embodiment, the second mathematical model is trained based on the plurality of reference parameters and the generated reference RGB channel values to determine at least one of the set of RGB channel values or the thermal map.

At step 506, a temperature field prediction is generated by the one or more processors 110 based on the determined temperature value corresponding to each of the plurality of electrical devices and the determined set of RGB channel values. In an embodiment, a set of pixel values are determined based on combining corresponding RGB channel values from among the set of RGB channel values. In an embodiment, the thermal map is generated based on the determined set of pixel values.

At step 508, the generated temperature field prediction is displayed on a user interface of a user device. The generated temperature field prediction includes the determined temperature value associated with each of the corresponding plurality of electrical devices, and at least one of the determined set of RGB channel values or a generated thermal map. In an embodiment, the thermal map corresponds to a graphical representation of the temperature values associated with the plurality of electrical devices in at least one of a 2-Dimensional (2D) space or a 3-Dimensional (3D) space.

While the above steps shown in FIG. 5 are described in a particular sequence, the steps may occur in variations to the sequence in accordance with various embodiments of the present invention. Further, the details related to various steps of FIG. 5, which are already covered in the description related to FIGS. 1-4 are not discussed again in detail here for the sake of brevity.

The present invention provides for various technical advancements based on the key features discussed above.

The disclosed method allows fast and directionally accurate prediction of temperature field within electrical enclosures that have the plurality of electrical devices. The temperature field prediction can be provided for a large number of load conditions (operating conditions and parameters), i.e., for a large number and combination of operating parameters.

With the disclosed method, instantaneous predictions of electrical device temperatures and thermal maps associated with the electrical enclosures can be obtained, for various operating conditions. The temperature field prediction for multiple operating conditions facilitates better and optimal thermal management. As the thermal management can be optimized, cabinet manufacturers are enabled to view predicted temperature fields quickly and accurately within the electrical enclosures, such as via a user device. This is particularly beneficial at the time of placement of electrical devices within the electrical enclosure since the manufacturers may determine the optimal positioning of the electrical components under various operating conditions. As the manufacturers would be aware of predicted temperature fields under various operating conditions, the thermal management is optimized and the risk for overheating and/or failure of electrical devices is reduced.

Further, the prediction of temperature field is performed by use of a set of trained mathematical models. The trained mathematical models may be ANNs. ANNs can be trained on a limited dataset that comprises relevant reference parameters. The dataset may be formed of reference parameters associated with the plurality of electrical devices, reference temperature values, and reference thermal maps. A first mathematical model may be trained based on reference parameters and reference temperature values while the second mathematical model may be trained based on reference parameters and reference thermal maps. The first and second mathematical models provide accurate and fast predictions with without necessarily requiring training on a large dataset.

The second mathematical model may be trained for the prediction of a temperature field at a specific plane that passes through all electrical devices within the electrical enclosure. The second mathematical model is trained on reference RGB channel values corresponding to the reference thermal maps. The second mathematical model, when deployed in use, predicts the corresponding RGB channel values given the parameters of the electrical devices as inputs. The RGB values are then re-combined to form the thermal maps which indicate temperature contour within the electrical enclosure. With the training of the second mathematical model on RGB channel values, the second mathematical model is computationally efficient while training as well as has a compact architecture. Further, with the reference thermal maps encoded in the form of a matrix, the second mathematical model remains agnostic to the source of the second dataset.

In use, a user desiring to predict temperature fields for a plurality of electrical devices in an electrical enclosure may enter certain parameters, such as power ratings of the electrical devices. The user may enter the parameters via a GUI. The system as described herein may provide the temperature field prediction with respect to the entered parameters and display the temperature field prediction on the GUI. As a result, the user can view the temperature values corresponding to the electrical devices as well as temperature contour (defined by the thermal maps) corresponding to the electrical enclosure. The user may modify the parameters to access temperature fields over various operating conditions and decide on optimal placements of the electrical devices within the electrical enclosure. As a result, efficient thermal monitoring can be achieved and overheating of electrical devices during operation can be prevented.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

LIST OF REFERENCE NUMERALS

| | |
|---|---|
| 100 | Environment |
| 102 | System |
| 104 | User device |
| 106 | Network |
| 108 | User interface |
| 110 | One or more processors |
| 112 | Memory |
| 114 | Input/output (I/O) interface |
| 116 | Database |
| 118 | Operating system |
| 200 | Electrical enclosure |
| 202 | Plurality of electrical devices |

| | |
|---|---|
| 202A | Plurality of electrical devices |
| 202B | Plurality of electrical devices |
| 202C | Plurality of electrical devices |
| 202D | Plurality of electrical devices |
| 202E | Plurality of electrical devices |
| 202F | Plurality of electrical devices |
| 204 | Virtual model |
| 206 | Thermal map |
| 300 | First dataset |
| 302 | Plurality of reference parameters of first dataset |
| 304 | Reference temperature values of first dataset |
| 310 | Graphical user interface |
| 400 | Second dataset |
| 402 | Plurality of reference parameters of second dataset |
| 404 | Reference thermal maps of second dataset |
| 410 | Graphical user interface |
| 500 | Method |
| 502 | Method steps |
| 504 | Method steps |
| 506 | Method steps |
| 508 | Method steps |
| 600 | Artificial neural network (ANN) |
| 602 | Input layer of ANN |
| 604 | One or more hidden layers of ANN |
| 606 | Output layer of ANN |
| 700 | Convolutional neural network (CNN) |
| 710 | Input layer of CNN |
| 711 | Convolutional layer of CNN |
| 712 | Pooling layer of CNN |
| 713 | Fully connected layer of CNN |
| 714 | Output layer of CNN |
| 720 | Nodes |
| 721 | Nodes |
| 722 | Nodes |
| 723 | Nodes |
| 724 | Nodes |
| 800 | User interface |
| 802 | Plurality of input fields |
| 804 | Plurality of temperature output fields |
| 806 | One or more image output fields |
| 808 | Temperature scale |
| 810 | Virtual model |

**Claims**

1. A computer-implemented method (500) of generating temperature field prediction of an electrical enclosure (200) comprising a plurality of electrical devices (202), the method (500) comprising:

receiving (502), by one or more processors (110), a user input including at least one parameter for each of the plurality of electrical devices (202);
determining (504), by one or more processors (110), using a set of trained mathematical models, a temperature value corresponding to each of the plurality of electrical devices (202) and a set of Red Green Blue (RGB) channel values corresponding to a thermal map associated with the electrical enclosure (200), based on the at least one parameter included in the received user input;
generating (506), by one or more processors (110), the temperature field prediction based on the determined temperature value corresponding to each of the plurality of electrical devices and the determined set of RGB channel values; and
displaying (508), by one or more processors (110), on a user interface (108) of a user device (104), the generated temperature field prediction including the determined temperature value associated with each of the corresponding plurality of electrical devices (202), and at least one of the determined set of RGB channel values or a generated thermal map.

2. The computer-implemented method (500) according to claim 1, wherein generating the temperature field prediction comprises:

determining a set of pixel values based on combining corresponding RGB channel values from among the set of RGB channel values; and
generating the thermal map based on the determined set of pixel values.

3. The computer-implemented method (500) according to any of claims 1 or 2, wherein a first mathematical model of the set of trained mathematical models is trained to determine the temperature value corresponding to each of the plurality of electrical devices (202), based on a first dataset including a plurality of reference parameters and corresponding reference temperature values associated with the plurality of electrical devices (202).

4. The computer-implemented method (500) according to any of claims 1-3, wherein a second mathematical model of the set of trained mathematical models is trained to determine at least one of the set of RGB channel values or the thermal map, based on a second dataset including a plurality of reference parameters associated with the plurality of electrical devices (202) and corresponding reference thermal maps.

5. The computer-implemented method (500) according to claim 4, wherein training of the second mathematical model comprises:

determining a pixel matrix corresponding to each of the corresponding reference thermal maps included in the received second dataset;
generating reference RBG channel values based on the determined pixel matrices associated with each of the corresponding reference thermal maps; and
training, based on the plurality of reference parameters and the generated reference RGB channel values, the second mathematical model of the set of trained mathematical models to determine at least one of the set of RGB channel values or the thermal map.

6. The computer-implemented method (500) according to any of claims 1-5, wherein each of the first mathematical model and the second mathematical model is an Artificial Neural Network (ANN).

7. The computer-implemented method (500) according to any of claims 1-6, wherein the thermal map corresponds to a graphical representation of the temperature values associated with the plurality of electrical devices (202) in at least one of a 2-Dimensional (2D) space or a 3-Dimensional (3D) space.

8. A system (102) for generating temperature field prediction of an electrical enclosure (200) comprising a plurality of electrical devices (202), the system (102) comprising:

a memory (112); and
one or more processors (110) communicatively coupled to the memory (112), wherein the memory (112) comprises programmable instructions which, when executed by the one or more processors (110), cause the one or more processors (110) to perform the method steps of claims 1 to 7.

9. An environment (100) comprising:

a system (102) as claimed in claim 8; and
a user device (104) communicatively coupled to the system (102) via a network (106), wherein the system (102) is configured to perform a method according to any of the claims 1 to 7.

10. A cloud server for generating temperature field prediction of an electrical enclosure (200) comprising a plurality of electrical devices (202), the cloud server comprising:

a memory (112); and
one or more processors (110) communicatively coupled to the memory (112), wherein the memory (112) comprises programmable instructions which, when executed by the one or more processors (110), cause the one or more processors (110) to perform the method steps of claims 1 to 7.

11. A computer-program product, having machine-readable instructions stored therein, which when executed by one or more processors (110), cause the one or more processors (110) to perform a method according to any of the claims 1 to 7.

12. A non-transitory computer readable medium encoded with executable instructions which, when executed by one or more processors (110), cause the one or more processors (110) to perform a method according to any one of the claims 1 to 7.

100

102

110

114

112

116

118

106

104

108

**FIG. 1**

206

202A

202D

202B

202C

**FIG. 2C**

204

202F

202A

202D

202E

202B

202C

**FIG. 2B**

200

202A

202D

202B

202C

**FIG. 2A**

**300**

| "CB_power" | "CU_power" | "MD_power" | "SG130" |
|---|---|---|---|
| 3 | 10 | 15 | 570 |
| 17 | 90 | 95 | 480 |
| 3 | 125 | 95 | 282 |
| 1 | 90 | 40 | 120 |
| 3 | 60 | 3 | 6 |

| "Temperature" | "Temperature" | "Temperature" | "Temperature" | "Temperature" | "Temperature" | "Temperature" |
|---|---|---|---|---|---|---|
| 67 | 55 | 58 | 93 | 87 | 84 | 102 |
| 85 | 73 | 81 | 119 | 118 | 117 | 118 |
| 72 | 64 | 77 | 100 | 101 | 101 | 95 |
| 52 | 48 | 57 | 61 | 62 | 62 | 59 |
| 38 | 38 | 43 | 35 | 35 | 35 | 35 |

302

304

310

**FIG. 3**

| "CB_power" | "CU_power" | "MD_power" | "SG130" |
|---|---|---|---|
| 3 | 10 | 15 | 570 |
| 17 | 90 | 95 | 480 |
| 3 | 125 | 95 | 282 |
| 1 | 90 | 40 | 120 |
| 3 | 60 | 3 | 6 |

**FIG. 4**

500

| 502 |
| --- |

| 504 |
| --- |

| 506 |
| --- |

| 508 |
| --- |

# FIG. 5

**FIG. 6**

FIG. 7

**FIG. 8**

Europäisches
Patentamt

European
Patent Office

Office européen
des brevets

# EUROPEAN SEARCH REPORT

Application Number

EP 23 20 0529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GENQIANG SHEN ET AL: "Research on Temperature and Humidity Prediction Model of High Voltage Switchgear Based on SSA-BP Algorithm", 2022 4TH INTERNATIONAL CONFERENCE ON SMART POWER & INTERNET ENERGY SYSTEMS (SPIES), IEEE, 9 December 2022 (2022-12-09), pages 1059-1064, XP034322751, DOI: 10.1109/SPIES55999.2022.10082381 [retrieved on 2023-04-03] * abstract * * figures 1-3, 6, 7 * * sections II.A, IV.A, V * * the whole document * ----- | 1-12 | INV. G06F30/27  ADD. G06F111/10 G06F119/08 G06N3/02 |
| X | ZHAO XU SHANGMOU ZX@ALIBABA-INC COM ET AL: "Explicitly Consider Server-Attached Fans for Thermal Modeling in Edge Data Centers", PROCEEDINGS OF THE ELEVENTH ACM INTERNATIONAL CONFERENCE ON FUTURE ENERGY SYSTEMS, ACMPUB27, NEW YORK, NY, USA, 12 June 2020 (2020-06-12), pages 554-559, XP058452044, DOI: 10.1145/3396851.3402921 ISBN: 978-1-4503-8009-6 * abstract * * figures 1, 2 * * section 3.1 * * the whole document * ----- | 1-12 | |
| | | | TECHNICAL FIELDS SEARCHED (IPC)  G06F G06N |

-/--

The present search report has been drawn up for all claims

| Place of search | Date of completion of the search | Examiner |
|---|---|---|
| Munich | 15 March 2024 | Joris, Pierre |

EPO FORM 1503 03.82 (P04C01)

Europäisches
Patentamt

European
Patent Office

Office européen
des brevets

# EUROPEAN SEARCH REPORT

**Application Number**

**EP 23 20 0529**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN LONGCHUAN ET AL: "Temperature and Power Aware Server Placement Optimization for Enterprise Data Center", 2018 IEEE 24TH INTERNATIONAL CONFERENCE ON PARALLEL AND DISTRIBUTED SYSTEMS (ICPADS), IEEE, 11 December 2018 (2018-12-11), pages 433-440, XP033520371, DOI: 10.1109/PADSW.2018.8644639 [retrieved on 2019-02-19] * figure 3 * * section IV.A * * the whole document * * abstract * | 1-12 | |
| X | CHEN JINCHENG ET AL: "Fast prediction of complicated temperature field using Conditional Multi-Attention Generative Adversarial Networks (CMAGAN)", EXPERT SYSTEMS WITH APPLICATIONS, ELSEVIER, AMSTERDAM, NL, vol. 186, 12 August 2021 (2021-08-12), XP086833180, ISSN: 0957-4174, DOI: 10.1016/J.ESWA.2021.115727 [retrieved on 2021-08-12] * abstract * * figures 1, 2, 5 * * page 3, left column * * section 3.2, 4.2.1 * * the whole document * | 1-12 | TECHNICAL FIELDS SEARCHED (IPC) |

The present search report has been drawn up for all claims

| Place of search | Date of completion of the search | Examiner |
|---|---|---|
| Munich | 15 March 2024 | Joris, Pierre |

EPO FORM 1503 03.82 (P04C01)

2